# EUROPEAN PATENT SPECIFICATION

(11) **EP 4 411 975 B1**
(45) Date of publication and mention of the grant of the patent: **19.08.2026**
(21) Application number: 22876001.3
(22) Date of filing: 21.09.2022
(51) Int. Cl.: H01G 2/14, H01G 2/18, H01G 11/14, H01G 11/74, H01G 11/78, H01G 11/80, H01G 11/82, H01G 11/84, H01M 50/152, H01M 50/167, H01M 50/184, H01M 50/188, H01M 50/193

(54) **ELECTRICITY STORAGE DEVICE AND METHOD FOR MANUFACTURING ELECTRICITY STORAGE DEVICE**
STROMSPEICHERVORRICHTUNG UND VERFAHREN ZUR HERSTELLUNG DER STROMSPEICHERVORRICHTUNG
DISPOSITIF DE STOCKAGE D'ÉLECTRICITÉ ET PROCÉDÉ DE FABRICATION DE DISPOSITIF DE STOCKAGE D'ÉLECTRICITÉ

(30) Priority: 29.09.2021 JP 2021159990
(43) Date of publication of application: 07.08.2024
(73) Proprietor: Panasonic Intellectual Property Management Co., Ltd., Kadoma-shi, Osaka 571-0057 (JP)
(72) Inventor: SHIMIZU, Kazumichi, Kadoma-shi, Osaka 571-0057 (JP); NAGAO, Takeshi, Kadoma-shi, Osaka 571-0057 (JP); MORIKAZU, Motonori, Kadoma-shi, Osaka 571-0057 (JP)
(74) Representative: Novagraaf International SA
(86) International application number: PCT/JP2022/035253
(87) International publication number: WO 2023/054134

(56) References cited:
- JP-A- 2001 176 491
- JP-A- 2006 012 604
- JP-A- 2021 125 304
- JP-A- H0 334 505
- JP-A- H05 251 076
- US-A1- 2017 194 619

## Description

### Technical Field

The present disclosure relates to an electricity storage device and a method for manufacturing an electricity storage device.

### Background Art

Conventionally, electricity storage devices including a so-called current interrupting device (CID) have been known (for example, PTL 1). Another device has been known in which a strip-shaped lead is folded back to avoid perforation during laser-welding to a terminal penetrating a sealing plate (for example, PTL 2). An electricity storage device of PTL 1 includes a bottomed cylindrical case, an electricity storage element disposed inside the case, a lead connected to an electrode of the electricity storage element, and a sealing member for sealing an opening part of the case. The sealing member includes an insulating gasket including a base, and an electrically conductive sealing plate including a protrusion. The base is disposed between the sealing plate and the electricity storage element. The protrusion of the sealing plate is inserted into a through hole formed in the base, and connected to the lead. With work of the current interrupting device, the protrusion is displaced in a direction away from the lead in response to an increase in an internal pressure of the case, so that a connection between the protrusion and the lead is disconnected.

### Citation List

### Patent Literature

[PTL 1] Japanese Unexamined Patent Application, Publication No. 2021-125304
[PTL 2] Japanese Application, Publication No. JPH0334505A

### SUMMARY OF THE INVENTION

In a current interrupting device of PTL 1, in order to enhance operation reliability, it is required that a lead is not easily displaced when a protrusion is displaced. However, when the lead is deformed to some extent, since the lead is also displaced together with the protrusion, the operation reliability of the current interrupting device may be damaged. In such a circumstance, one object of the present disclosure is to increase operation reliability of a current interrupting device.

One aspect of the present disclosure relates to an electricity storage device. The electricity storage device includes a case including a tubular part that is cylindrical and that includes an opening end part at a first end, and a bottom part closing a second end of the tubular part; an electricity storage element disposed inside the case and including a pair of electrodes; a lead connected to one electrode of the pair of electrodes; and a sealing member for sealing the opening end part of the case, the sealing member including a gasket with an insulating property, and a sealing plate with electric conductivity, the gasket including a compression part interposed between the tubular part and the sealing plate, and a base that is disk-shaped and that overlaps the sealing plate, and the sealing plate including a displaceable part provided with a protrusion protruding toward the electricity storage element, and an outer peripheral part provided in a periphery of the displaceable part and sandwiched by the compression part, the base disposed between the sealing plate and the electricity storage element, the base including a through hole, the protrusion of the sealing plate inserted into the through hole, the lead including a folded part that is folded at least double and joined by at least one weld-deposited part, the protrusion of the sealing plate and the folded part of the lead being connected to each other, and connection between the protrusion and the lead being disconnected when the protrusion is displaced in a direction away from the lead in response to an increase in an internal pressure inside the case.

The present disclosure can enhance the operation reliability of the current interrupting device.

### BRIEF DESCRIPTION OF THE DRAWINGS

FIG. 1 is a sectional view schematically showing a configuration of an electricity storage device according to a first exemplary embodiment.
FIG. 2A is a sectional view of a folded part and its periphery, showing an enlarged view of a main part of the electricity storage device of according to the first exemplary embodiment.
FIG. 2B is a bottom view of the folded part, showing an enlarged view of the main part the electricity storage device of according to the first exemplary embodiment.
FIG. 3A is a sectional view of a folded part and its periphery, showing an enlarged view of a main part of an electricity storage device according to a modified example 1 of the first exemplary embodiment.
FIG. 3B is a bottom view of the folded part, showing an enlarged view of the main part of the electricity storage device according to the modified example 1 of the first exemplary embodiment.
FIG. 4A is a sectional view of a folded part and its periphery, showing an enlarged view of a main part of an electricity storage device according to a modified example 2 of the first exemplary embodiment.
FIG. 4B is a bottom view of the folded part, showing an enlarged view of the main part of the electricity storage device according to the modified example 2 of the first exemplary embodiment.
FIG. 5A is a sectional view of a folded part and its periphery, showing an enlarged view of a main part of an electricity storage device according to a modified example 3 of the first exemplary embodiment.
FIG. 5B is a bottom view of the folded part, showing an enlarged view of the main part of the electricity storage device according to the modified example 3 of the first exemplary embodiment.
FIG. 6A is a sectional view of a folded part and its periphery, showing an enlarged view of a main part of the electricity storage device of according to a second exemplary embodiment.
FIG. 6B is a bottom view of the folded part, showing an enlarged view of the main part the electricity storage device of according to the second exemplary embodiment.

### DESCRIPTION OF EMBODIMENT

An electricity storage device and a method for manufacturing an electricity storage device according to the present disclosure will be described hereinafter with reference to examples of exemplary embodiments. However, the present disclosure is not limited to the examples described below. In the following description, specific numerical values and materials may be provided as examples, but other numerical values and materials may be applied as long as the effect of the present disclosure can be obtained.

### (Electricity storage device)

An electricity storage device according to the present disclosure may be a secondary battery or may be a capacitor. The electricity storage device may be a non-aqueous electrolyte secondary battery (a lithium-ion secondary battery, a lithium secondary battery, or the like), a nickel-hydrogen secondary battery, or the like. The electricity storage device may be an electric double layer capacitor or a lithium-ion capacitor, or the like. The electricity storage device includes a case, an electricity storage element, a lead, and a sealing member.

The case includes a tubular part being cylindrical and including an opening end part at a first end, and a bottom part closing a second end of the tubular part. The case may function as, for example, one electrode terminal. When the case functions as an electrode terminal, for example, the case is formed of electrically conductive metal, one electrode of the electricity storage element (an electrode that is not electrically connected to a sealing plate mentioned later) and the case may be electrically connected to each other. For example, a negative electrode and the case may be electrically connected to each other.

For the case, for example, a metal case can be used. The metal case may be made of metal such as aluminum, iron, nickel, copper, or an alloy or a clad material of these metals, or the like. The case of the electricity storage device is not limited to the above configuration and may be a well-known case.

The electricity storage element is disposed inside the case, and includes a pair of electrodes. The electricity storage element is not particularly limited, and may be selected depending on a type of the electricity storage device. A well-known electricity storage element can be used as the electricity storage element. For example, when the electricity storage device is a secondary battery, an electricity storage element including a positive electrode, a negative electrode, a separator, and an electrolyte solution may be used. A negative electrode of the lithium-ion secondary battery of one example includes, as a negative-electrode active material, a substance that reversibly occludes and releases lithium ions. Examples of the negative electrode active material include carbon materials such as graphite and silicon that is inorganic compounds such as titanium oxide. The positive electrode of the secondary battery may include a transition metal composite oxide containing lithium as a positive electrode active material. The transition metal composite oxide includes, for example, elements such as nickel, manganese, cobalt, and aluminum.

When the electricity storage device is a capacitor, an electricity storage element may include two electrodes, an electrolyte solution, and a separator. The configuration elements can be selected depending on a type of the capacitor.

The lead is connected to one electrode of the pair of electrodes of the electricity storage element. A lead used in a well-known electricity storage device may be used as the lead. For the lead, a belt-like metal sheet may be used. Examples of the metal (electrically conductive metal) constituting the lead include aluminum, iron, nickel, copper, or an alloy or a clad material of these metals, or the like. A first end of the lead may be connected to any one electrode of the pair of electrodes of the electricity storage element. However, when the electricity storage device is a secondary battery, for example, the lead is connected to a positive electrode.

The lead includes a folded part that is folded at least double and joined by at least one weld-deposited part. The folded part may be formed by folding the lead in the longitudinal direction, or may be formed by folding the lead in the width direction thereof. The folded part may be formed in any number of layers as long as it is double or more. The weld-deposited part may be formed by, for example, welding. A method of welding is not particularly limited, and examples of the method include laser welding, resistance welding, friction stirring, or the like.

The sealing member seals the opening end part of the case. The sealing member includes a gasket with an insulating property, and a sealing plate with electric conductivity.

The gasket includes a compression part interposed between the tubular part of the case and the sealing plate, and a base that is a disk-shaped, overlapping onto the sealing plate. The base is disposed between the sealing plate and the electricity storage element. The base includes a through hole. The through hole may be disposed in a central region of the base. The shape of the through hole is not particularly limited, and the shape may be circular, oval, oblong, rectangular, polygonal, and the like.

The gasket is made of a material with an elasticity and an insulating property for functioning as the gasket. The gasket may be formed of a well-known material used for gaskets of secondary batteries or capacitors. Examples of materials of the gasket include polypropylene (PP), polyphenylene sulfide (PPS), polybutylene terephthalate (PBT), perfluoro alkoxy alane (PFA), polyether ether ketone (PEEK), and the like. Additives (for example, well-known additives) may be added to these materials as necessary. A method for forming the gasket is not limited, and, for example, the gasket may be formed by a method, such as injection molding.

The sealing plate includes a displaceable part provided with a protrusion protruding toward the electricity storage element, an outer peripheral part provided around the displaceable part and sandwiched by the compression part of the gasket, and a thin thickness part linking between the displaceable part and the outer peripheral part. The sealing plate is formed in, for example, a circular shape as a whole. The displaceable part may be circular or may be polygonal seen in the axial direction of the case. The outer peripheral part provided in the periphery of the displaceable part may be, for example, annular seen in the axial direction of the case, and the thin-thickness part may also be annular. Note here that the thin thickness part is not necessarily provided. The protrusion may be disposed in, for example, the center of a displaceable part. The sealing plate functions as an electrode terminal, or functions as a displaceable member electrically connecting the electrode terminal (for example, a terminal cap) and the lead. The sealing plate is formed of, for example, a metal plate, and, for example, made of aluminum, nickel, copper, or iron, or an alloy or a clad material of these metals, or the like.

The protrusion of the sealing plate is inserted into the through hole of the gasket. The protrusion is connected to the folded part of the lead. That is to say, the lead is electrically and physically connected to the sealing plate. A method for connecting the lead to the sealing plate is not particularly limited. For example, welding or the like may be used. For function as a current interrupting device, the method needs to be a connection method for releasing the connection between the lead and the sealing plate when a force for separating the lead and the sealing plate from each other increases. When the lead is connected to the sealing plate by welding, a force required to separate the lead from the sealing plate may be controlled by changing conditions such as a welding area and a welding depth. A welding method is not particularly limited, and examples of the method include laser welding, resistance welding, friction stirring, ultrasonic joining, and the like.

In the electricity storage device of the present disclosure, as the action of the current interrupting device, the protrusion is displaced in a direction away from the lead in response to an increase in an internal pressure of the case, so that connection between the protrusion and the lead is disconnected. The displacement may occur when the internal pressure in the case exceeds a predetermined value. When such a displacement occurs, a part to which the protrusion of the lead is connected, that is, the folded part, the lead is folded and joined. Therefore, the folded part has higher strength and is less easily deformed as compared with a lead that is not folded. Therefore, even if the lead is pulled by the displaced protrusion, displacement of the lead is suppressed. The protrusion is cut off from the lead in which displacement is suppressed, thus, the current interrupting device is appropriately operated.

The folded part of the lead may include a first section that overlaps the protrusion seen in the axial direction of the case and a second section that overlaps the base seen in the axial direction of the case. The first section and the second section may include a weld-deposited part, respectively. With this configuration, the folded part is joined by the weld-deposited part in both the first section and the second section. Since the force of the lead is enhanced in a wide range including the first section and the second section, the operation reliability of the current interrupting device can be more enhanced.

The weld-deposited part of the second section may overlap an edge of the through hole in the base seen in the axial direction of the case. With this configuration, the force of the lead is enhanced in a region corresponding to the edge of the through hole. As a result, when the lead is pulled by displaced protrusion, pulling of the lead into the through hole can be effectively suppressed.

A dimension in the direction in which the lead of the weld-deposited part formed in the first section faces the protrusion (for example, the axial direction) may be larger than a dimension in the same direction of the weld-deposited part formed in the second section. With this configuration, while the effect of heat on the member in the periphery is suppressed, a weld-deposited part with more reliability can be formed.

The folded part may be formed by folding back the lead in the longitudinal direction and joining the lead being folded back. Alternatively, the folded part may be formed by folding back the lead in the width direction thereof and joining the lead being folded back.

Only one weld-deposited part of the first section may be formed, or a plurality of weld-deposited parts of the first section may be formed. In the latter case, a plurality of weld-deposited parts may be formed one by one or may be formed all at once.

Only one weld-deposited part of the second section may be formed, or a plurality of weld-deposited parts of the second section may be formed. In the latter case, a plurality of weld-deposited parts may be formed one by one or may be formed all at once.

The weld-deposited part of the first section may extend in the longitudinal direction of the lead, or may extend in the width direction of the lead.

The weld-deposited part of the second section may extend in the longitudinal direction of the lead, or may extend in the width direction of the lead.

The weld-deposited part of the first section and the weld-deposited part of the second section may be formed continuously with each other, or may be formed separately from each other.

### (Method for manufacturing electricity storage device)

A method for manufacturing an electricity storage device according to one exemplary embodiment of the present disclosure includes a first joining step and a first joining step.

In the first folding step, an end part (an end part opposite to the end part connected to one of the electrodes) of the lead is folded at least double. This folding may be carried out in the longitudinal direction of the lead or in the width direction of the lead.

In the first joining step, in a state in which the end part of the folded lead in the first folding step and the protrusion of the sealing plate are brought into contact with each other, both are joined to each other to form a weld-deposited part. This joining may be carried out by, for example, welding.

A method for manufacturing an electricity storage device in another exemplary embodiment of the present disclosure includes a first joining step similar to the above, a second joining step, and a third welding step.

In the second joining step, an end part of the lead folded in the first folding step is joined. This joining may be carried out by, for example, welding. Thus, the end part of the lead is fixed in a folded state.

In the third joining step, the end part of the lead joined in the second joining step and the protrusion of the sealing plate are joined to each other to form a weld-deposited part. This joining may be carried out by, for example, welding.

A method for manufacturing an electricity storage device in still another exemplary embodiment of the present disclosure includes a fourth joining step, a second folding step, and a fifth joining step.

In the fourth joining step, the lead (for example, a region in the vicinity of an end part of the lead) and the protrusion of the sealing plate are joined to each other. This joining may be carried out by, for example, welding. Thus, the lead and the protrusion are fixed to each other.

In the second folding step, an end part of the lead (an end part opposite to the end part connected to the electrode) is folded at least double so as to overlap the joining part between the lead and the protrusion. This folding may be carried out in the longitudinal direction of the lead, or may be in the width direction of the lead.

In the fifth joining step, the end part of the lead folded in the second folding step is joined so as to form a weld-deposited part. This joining may be carried out by, for example, welding.

As mentioned above, the present disclosure can enhance the operation reliability of the current interrupting device by enhancing the strength of the lead so as to suppress deformation.

Hereinafter, an example of an electricity storage device according to the present disclosure is specifically described with reference to drawings. The component elements described above can be applied to the component elements of the electricity storage device of one example described below. The component element of the electricity storage device of one example described below can be changed based on the above description. Furthermore, the matter described below may be applied to the exemplary embodiment described above. Among the component elements of the electricity storage device of one example described below, the component elements that are not essential to the electricity storage device according to the present disclosure may be omitted. Note here that the drawings shown below are schematic and do not accurately reflect the shape or number of members.

### <<First exemplary embodiment>>

A first exemplary embodiment of the present disclosure is described. Electricity storage device 10 of this exemplary embodiment is a lithium-ion secondary battery, but is not limited to this. For example, electricity storage device 10 may be a lithium-ion capacitor, an electric double layer capacitor, an electricity storage device that is an intermediate electricity storage device between a lithium-ion secondary battery and a lithium-ion capacitor, or other electrochemical devices.

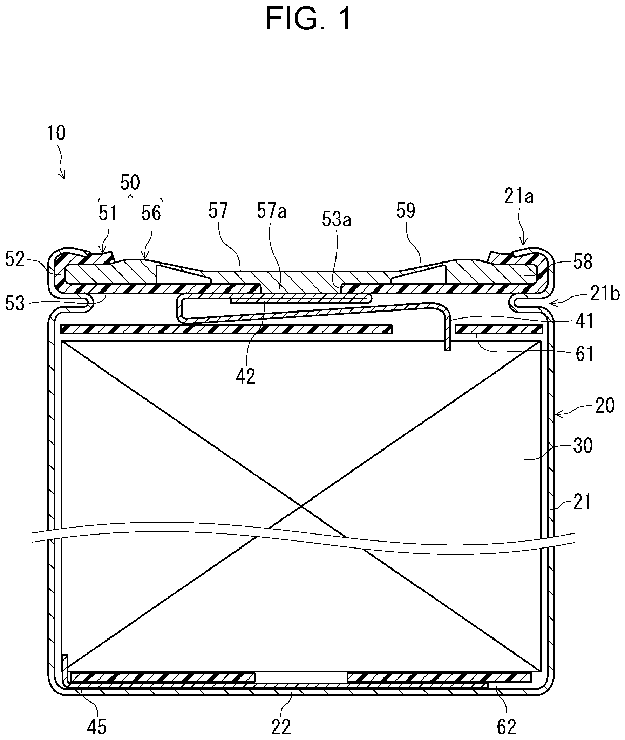

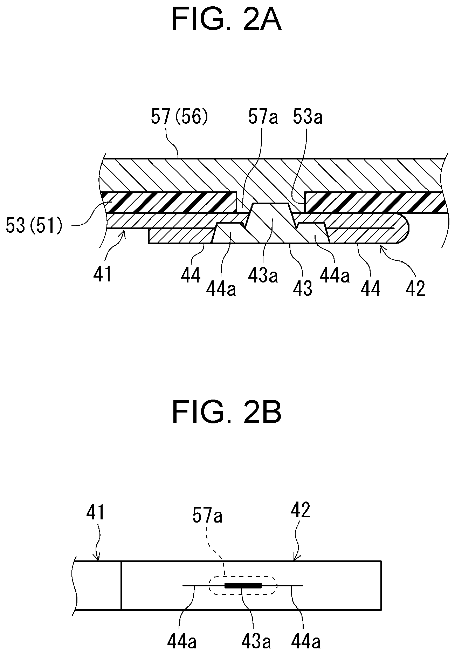

As shown in FIG. 1, FIG. 2A, and FIG. 2B, electricity storage device 10 includes bottomed cylindrical case 20, electricity storage element 30 disposed in case 20 and including a pair of electrodes (not shown), first lead 41 connected to one electrode among the pair of electrodes, second lead 45 connected to the other electrode, and sealing member 50 sealing opening end part 21a of case 20. Electricity storage device 10 further includes first insulating plate 61 and second insulating plate 62. Each of first insulating plate 61 and second insulating plate 62 is a disk-shaped member including a through hole.

Case 20 includes tubular part 21 including opening end part 21a at a first end (an upper end in FIG. 1), and bottom part 22 closing a second end of tubular part 21. Groove part 21b with an annular shape protruding toward an inside in the radial direction of tubular part 21 is formed in the vicinity of opening end part 21a of tubular part 21. Sealing member 50 is disposed on an inner circumferential surface of groove part 21b. Opening end part 21a of case 20 is caulked to outer peripheral part 58 of sealing plate 56 mentioned later with gasket 51 interposed therebetween. Accordingly, sealing member 50 is sandwiched between groove part 21b and opening end part 21a.

Electricity storage element 30 is generally columnar-shaped. Electricity storage element 30 is configured by winding a positive electrode and a negative electrode (both are not shown) with a separator (not shown) interposed therebetween.

A first end of first lead 41 is connected to one electrode (a positive electrode in this example) of electricity storage element 30. First lead 41 is formed of belt-like metal sheet, but is not limited to this. Folded part 42 is formed on a second end of first lead 41. This folded part 42 is connected to protrusion 57a of sealing plate 56. Thus, sealing plate 56 functions as a positive electrode terminal of electricity storage device 10. First lead 41 is one example of the lead.

As shown in FIG. 2A and FIG. 2B, folded part 42 is formed by folding double the second end of first lead 41 and the folded lead by first weld-deposited part 43a and second weld-deposited part 44a. Folded part 42 is formed by folding back first lead 41 in the longitudinal direction (in the right and left direction of FIG. 1) and joining the folded-back part lead. Folded part 42 is folded back in such a manner in which the folding part is near electricity storage element 30. Folded part 42 includes first section 43 that overlaps protrusion 57a seen in the axial direction (also referred to as simply the axial direction) of case 20 and second section 44 that overlaps base 53 seen in the axial direction.

First section 43 includes first weld-deposited part 43a (weld-deposited part) that joins itself. First weld-deposited part 43a joins first section 43 of first lead 41 and protrusion 57a of sealing plate 56 to each other. First weld-deposited part 43a has a depth that joins two layers of first lead 41 and that reaches protrusion 57a of sealing plate 56. Second weld-deposited part 44a has a depth that joins two layers of first lead 41. First weld-deposited part 43a extends in the longitudinal direction of first lead 41. Second section 44 includes second weld-deposited part 44a (weld-deposited part) joining itself. Second weld-deposited part 44a overlaps an edge of through hole 53a in base 53 seen in the axial direction of the case. Second weld-deposited part 44a extends in the longitudinal direction of first lead 41. First weld-deposited part 43a and second weld-deposited part 44a are formed continuously with each other.

First weld-deposited part 43a and second weld-deposited part 44a may be formed by, for example, joining first lead 41 with the second end folded back and protrusion 57a of sealing plate 56 by welding in a state in which first lead 41 and protrusion 57a are brought into contact with each other. Alternatively, first weld-deposited part 43a and second weld-deposited part 44a may be formed by, for example, joining by welding the folded part of first lead 41 with the second end folded back, and then joining the second end of first lead 41 and protrusion 57a of sealing plate 56 to each other by welding. Alternatively, first weld-deposited part 43a and second weld-deposited part 44a may be formed by, for example, joining first lead 41 and protrusion 57a of sealing plate 56 by welding, and then folding back the second end of first lead 41, and joining the folded part by welding.

A first end of second lead 45 is connected to the other electrode (negative electrode in this example) of electricity storage element 30. Second lead 45 is formed of a belt-like metal sheet, but it is not limited to this. A second end of second lead 45 is connected to bottom part 22 of case 20. Thus, case 20 functions as the negative electrode terminal of electricity storage device 10.

Sealing member 50 includes gasket 51 with an insulating property and sealing plate 56 with electric conductivity. Gasket 51 includes compression part 52 interposed between tubular part 21 (groove part 21b) and sealing plate 56 and disk-shaped base 53 that overlaps sealing plate 56. Base 53 is disposed between sealing plate 56 and electricity storage element 30. Base 53 has a planar shape that is substantially the same size as a planar shape (circular shape) of sealing plate 56. Circular-shaped through hole 53a is formed in a center of base 53. A peripheral edge of base 53 is in close contact with outer peripheral part 58 of sealing plate 56. Note here that gasket 51 may include through hole (not shown) for sending gas to sealing plate 56 in addition to through hole 53a for inserting protrusion 57a into base 53.

Sealing plate 56 includes displaceable part 57 provided with protrusion 57a protruding toward electricity storage element 30, and outer peripheral part 58 provided in a periphery of displaceable part 57 and sandwiched by compression part 52 of gasket 51, and thin thickness part 59 linking between displaceable part 57 and outer peripheral part 58. A cross-sectional shape (cross-sectional shape in a cross section vertical to the axis of case 20) of protrusion 57a is a circular shape, but is not limited to this. The thickness of thin thickness part 59 is smaller than the thickness of displaceable part 57 and the thickness of outer peripheral part 58.

Protrusion 57a of sealing plate 56 is inserted into through hole 53a. Herein, a gap may be formed or not formed between protrusion 57a and through hole 53a.

When an internal pressure inside case 20 is increased, protrusion 57a of displaceable part 57 is displaced in a direction in which the protrusion is away from electricity storage element 30 (that is, the direction away from first lead 41). On the other hand, displacement of first lead 41 is suppressed by folded part 42 with high strength. Therefore, when the displacement of protrusion 57a is increased, connection between protrusion 57a and first lead 41 is disconnected. As a result, overcharge or the like is suppressed.

When internal pressure inside case 20 is further increased and displacement of displaceable part 57 is further increased, thin thickness part 59 or the peripheral edge thereof is broken. As a result, the gas inside case 20 is released to the outside of case 20.

### <<Modified example 1 of first exemplary embodiment>>

Modified example 1 of the first exemplary embodiment of the present disclosure is described. Electricity storage device 10 of this modified example is different in the configuration of folded part 42 from the first exemplary embodiment. Hereinafter, the difference from the first exemplary embodiment is mainly described.

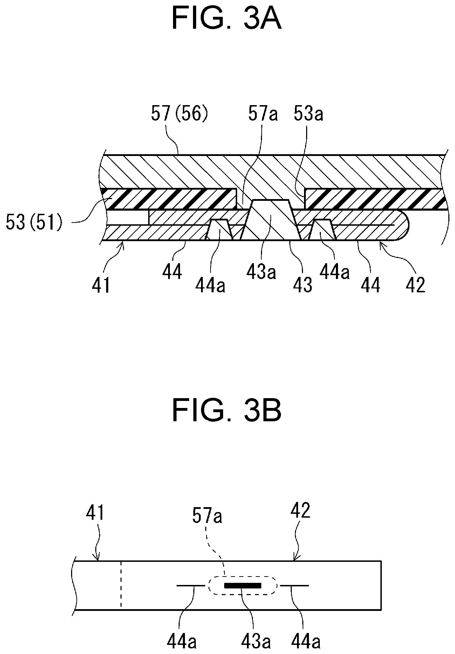

As shown in FIGs. 3A and 3B, folded part 42 of this modified example is folded back so that the part folded back is close to sealing member 50. Furthermore, first weld-deposited part 43a and second weld-deposited part 44a are formed separately from each other.

### <<Modified example 2 of first exemplary embodiment>>

Modified example 2 of the first exemplary embodiment of the present disclosure is described. Electricity storage device 10 of this modified example is different in the configuration of folded part 42 from the first exemplary embodiment. Hereinafter, the difference from the first exemplary embodiment is mainly described.

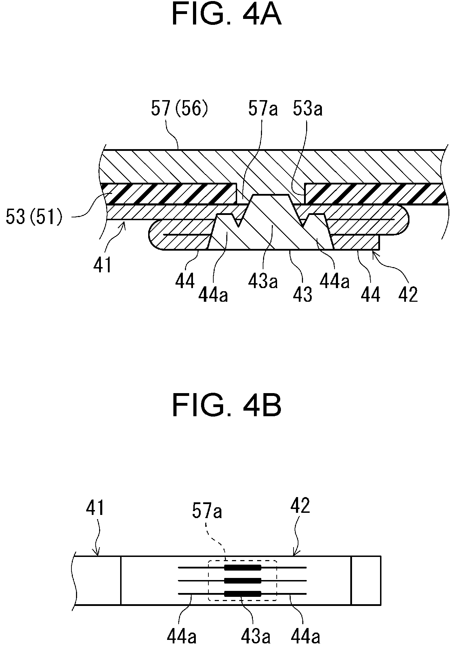

As shown in FIGs. 4A and 4B, folded part 42 of this modified example is formed by triply folding the second end of first lead 41 and joining the folded part by first weld-deposited part 43a and second weld-deposited part 44a. First weld-deposited part 43a has a depth in which three layers of first lead 41 are joined and which reaches protrusion 57a of sealing plate 56. Second weld-deposited part 44a has a depth that joins three layers of first lead 41. Furthermore, first weld-deposited part 43a and second weld-deposited part 44a are formed continuously with each other. A plurality of (three in this example) of first weld-deposited parts 43a and second weld-deposited parts 44a are formed in a predetermined interval in the width direction of first lead 41. Such a plurality of first weld-deposited parts 43a and second weld-deposited parts 44a may be formed one by one, or may be formed at one time by laser welding using the diffraction grating (DOE).

### <<Modified example 3 of first exemplary embodiment>>

Modified example 3 of the first exemplary embodiment of the present disclosure is described. Electricity storage device 10 of this modified example is different in the configuration of folded part 42 from the first exemplary embodiment. Hereinafter, the difference from the first exemplary embodiment is mainly described.

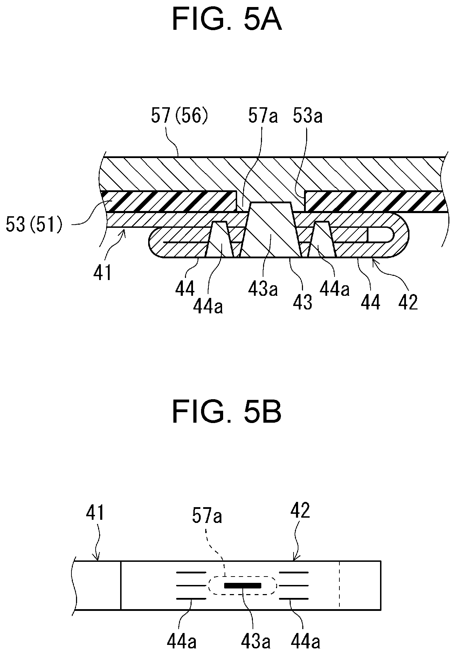

As shown in FIGs. 5A and 5B, folded part 42 of this modified example is formed by triply folding a second end of first lead 41 to be joined by first weld-deposited part 43a and second weld-deposited part 44a. Folded part 42 is formed so as to entangle the second end of first lead 41. Furthermore, first weld-deposited part 43a and second weld-deposited part 44a are formed separately from each other. A plurality of (three for each second section 44 in this example) second weld-deposited parts 44a is (are) formed in a predetermined interval with each other in the width direction of first lead 41. Such a plurality of second weld-deposited parts 44a may be formed one by one, or may be formed at one time by laser welding using the diffraction grating (DOE).

### <<Second exemplary embodiment>>

A second exemplary embodiment of the present disclosure is described. Electricity storage device 10 of this exemplary embodiment is different in the configurations of first weld-deposited part 43a and second weld-deposited part 44a from the first exemplary embodiment. Hereinafter, the difference from the first exemplary embodiment is mainly described.

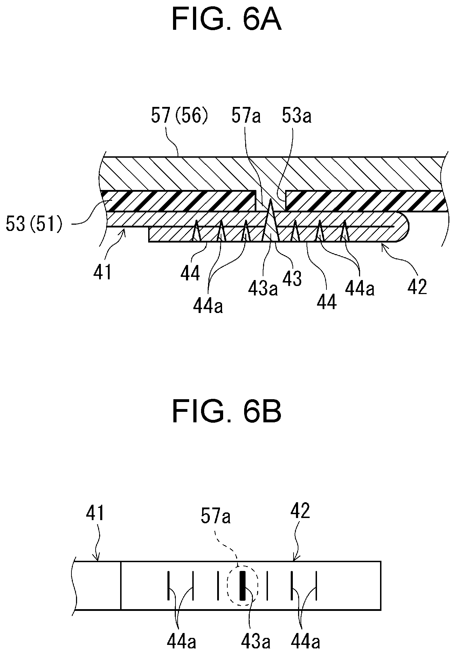

As shown in FIGs. 6A and 6B, first weld-deposited part 43a of this exemplary embodiment extends in the width direction of first lead 41. Furthermore, second weld-deposited part 44a of this exemplary embodiment extends in the width direction of first lead 41. A plurality of (six in this example) of second weld-deposited parts 44a is (are) formed in a predetermined interval. First weld-deposited part 43a and second weld-deposited part 44a are formed separately from each other.

Note here that in FIG. 2A to FIG. 6B, for convenience of description, the lines showing the weld-deposited parts are shown in different thicknesses, but this does not mean that the width of the weld-deposited part is different depending on parts. The widths of the weld-deposited parts may be the same as each other, but may be different from each other. Furthermore, although the extension, number, and arrangement of the welded portions are different in each drawing, it is needless to say that the extension, number, and arrangement of the weld-deposited parts in another figure may be applied to the leads in each drawing.

### INDUSTRIAL APPLICABILITY

The present disclosure can be applied for an electricity storage device and a method for manufacturing an electricity storage device.

### REFERENCE MARKS IN THE DRAWINGS

10: electricity storage device
20: case
21: tubular part
21a: opening end part
21b: groove part
22: bottom part
30: electricity storage element
41: first lead (lead)
42: folded part
43: first section
43a: first weld-deposited part (weld-deposited part)
44: second section
44a: second weld-deposited part (weld-deposited part)
45: second lead
50: sealing member
51: gasket
52: compression part
53: base
53a: through hole
53b: vent hole
56: sealing plate
57: displaceable part
57a: protrusion
58: outer peripheral part
59: thin thickness part
61: first insulating plate
62: second insulating plate

## Claims

1. An electricity storage device comprising:
a case including a tubular part that is cylindrical and that includes an opening end part at a first end, and a bottom part closing a second end of the tubular part;
an electricity storage element disposed inside the case and including a pair of electrodes;
a lead connected to one electrode of the pair of electrodes; and
a sealing member for sealing the opening end part of the case,
the sealing member including a gasket with an insulating property, and a sealing plate with electric conductivity,
the gasket including a compression part interposed between the tubular part and the sealing plate, and a base that is disk-shaped and that overlaps the sealing plate, and
the sealing plate including a displaceable part including a protrusion protruding toward the electricity storage element, and an outer peripheral part provided in a periphery of the displaceable part and clamped by the compression part,
the base disposed between the sealing plate and the electricity storage element,
the base including a through hole,
the protrusion of the sealing plate inserted into the through hole,
the lead including a folded part that is folded at least double and joined by at least one weld-deposited part,
the protrusion of the sealing plate and the folded part of the lead being connected to each other, and
connection between the protrusion and the lead being disconnected when the protrusion is displaced in a direction away from the lead in response to an increase in an internal pressure inside the case.

2. The electricity storage device according to claim 1, wherein the folded part of the lead includes a first section overlapping the protrusion seen along an axis of the case, and a second section overlapping the base seen along the axis,
the first section and the second section each includes a corresponding one of the at least one weld-deposited part.

3. The electricity storage device according to claim 2, wherein a weld-deposited part corresponding to the second section among the at least one weld-deposit part overlaps an edge of the through hole in the base seen along the axis.

4. The electricity storage device according to any one of claim 1 to claim 3, wherein the folded part is formed by folding back the lead in a longitudinal direction of the lead and joining the lead being folded back.

5. The electricity storage device according to any one of claim 1 to claim 3, wherein the folded part is formed by folding back the lead in a width direction of the lead and joining the lead being folded back.

6. The electricity storage device according to claim 2 or claim 3, wherein a dimension in a direction in which the lead of a weld-deposited part corresponding to the first section among the at least one weld-deposit part faces the protrusion is a larger than a dimension in a direction in which the lead of a weld-deposited part corresponding to the second section among the at least one weld-deposit part faces the protrusion.

7. A method for manufacturing an electricity storage device according to any one of claim 1 to claim 6, the method comprising:
first folding of folding an end part of the lead at least double;
first joining of brining the end part being folded and the protrusion of the sealing plate into contact with each other and joining the end part being folded and the protrusion of the sealing plate to each other to form the at least one weld-deposited part.

8. A method for manufacturing an electricity storage device according to any one of claim 1 to claim 6, the method comprising:
first folding of folding an end part of the lead at least double;
second joining of joining the end part folded; and
third joining of joining the end part joined and the protrusion of the sealing plate to each other to form the at least one weld-deposited part.

9. A method for manufacturing an electricity storage device according to any one of claim 1 to claim 6, the method comprising:
fourth joining of joining the lead and the protrusion of the sealing plate to each other; second folding of folding the end part of the lead at least double to overlap a joining section between the lead and the protrusion; and
fifth joining of joining the end part being folded to form the at least one weld-deposited part.

## Patentansprüche

1. Elektrizitätsspeichervorrichtung, umfassend:
ein Gehäuse, das einen röhrenförmigen Teil umfasst, der zylindrisch ist und einen öffnungsseitigen Endteil an einem ersten Ende sowie einen Bodenteil, der ein zweites Ende des röhrenförmigen Teils verschließt, umfasst;
ein Elektrizitätsspeicherelement, das innerhalb des Gehäuses angeordnet ist und ein Paar von Elektroden umfasst;
eine Anschlussleitung, die mit einer Elektrode des Paares von Elektroden verbunden ist; und
ein Dichtungselement zum Abdichten des öffnungsseitigen Endteils des Gehäuses,
wobei das Dichtungselement eine Dichtung mit einer isolierenden Eigenschaft und eine Dichtungsplatte mit elektrischer Leitfähigkeit umfasst,
wobei die Dichtung einen Kompressionsteil, der zwischen dem röhrenförmigen Teil und der Dichtungsplatte angeordnet ist, und eine Basis, die scheibenförmig ist und die Dichtungsplatte überlappt, umfasst, und
wobei die Dichtungsplatte einen verschiebbaren Teil, der mit einem Vorsprung versehen ist, welcher in Richtung des Elektrizitätsspeicherelements vorsteht, und einen äußeren Umfangsteil, der an einem Umfang des verschiebbaren Teils vorgesehen und durch den Kompressionsteil eingeklemmt ist, umfasst,
wobei die Basis zwischen der Dichtungsplatte und dem Elektrizitätsspeicherelement angeordnet ist,
wobei die Basis ein Durchgangsloch umfasst,
wobei der Vorsprung der Dichtungsplatte in das Durchgangsloch eingeführt ist,
wobei die Anschlussleitung einen gefalteten Teil umfasst, der mindestens doppelt gefaltet und durch mindestens einen schweißabgelagerten Teil verbunden ist,
wobei der Vorsprung der Dichtungsplatte und der gefaltete Teil der Anschlussleitung miteinander verbunden sind, und
wobei die Verbindung zwischen dem Vorsprung und der Anschlussleitung getrennt wird, wenn der Vorsprung in einer von der Anschlussleitung weg gerichteten Richtung als Reaktion auf einen Anstieg eines Innendrucks innerhalb des Gehäuses verschoben wird.

2. Elektrizitätsspeichervorrichtung nach Anspruch 1, wobei der gefaltete Teil der Anschlussleitung einen ersten Abschnitt, der den Vorsprung gesehen entlang einer Achse des Gehäuses überlappt, und einen zweiten Abschnitt, der die Basis gesehen entlang der Achse überlappt, umfasst,
wobei der erste Abschnitt und der zweite Abschnitt jeweils einen entsprechenden des mindestens einen schweißabgelagerten Teils umfassen.

3. Elektrizitätsspeichervorrichtung nach Anspruch 2, wobei ein schweißabgelagerter Teil, der dem zweiten Abschnitt entspricht, unter dem mindestens einen schweißabgelagerten Teil eine Kante des Durchgangslochs in der Basis gesehen entlang der Achse überlappt.

4. Elektrizitätsspeichervorrichtung nach einem der Ansprüche 1 bis 3, wobei der gefaltete Teil durch Zurückfalten der Anschlussleitung in einer Längsrichtung der Anschlussleitung und Verbinden der zurückgefalteten Anschlussleitung gebildet ist.

5. Elektrizitätsspeichervorrichtung nach einem der Ansprüche 1 bis 3, wobei der gefaltete Teil durch Zurückfalten der Anschlussleitung in einer Breitenrichtung der Anschlussleitung und Verbinden der zurückgefalteten Anschlussleitung gebildet ist.

6. Elektrizitätsspeichervorrichtung nach Anspruch 2 oder Anspruch 3, wobei eine Abmessung in einer Richtung, in der die Anschlussleitung eines schweißabgelagerten Teils, der dem ersten Abschnitt entspricht, unter dem mindestens einen schweißabgelagerten Teil dem Vorsprung gegenüberliegt, eine größere ist als eine Abmessung in einer Richtung, in der die Anschlussleitung eines schweißabgelagerten Teils, der dem zweiten Abschnitt entspricht, unter dem mindestens einen schweißabgelagerten Teil dem Vorsprung gegenüberliegt.

7. Verfahren zum Herstellen einer Elektrizitätsspeichervorrichtung nach einem der Ansprüche 1 bis 6, das Verfahren umfassend:
erstes Falten zum mindestens doppelten Falten eines Endteils der Anschlussleitung;
erstes Verbinden zum In-Kontakt-Bringen des gefalteten Endteils und des Vorsprungs der Dichtungsplatte miteinander und zum Verbinden des gefalteten Endteils und des Vorsprungs der Dichtungsplatte miteinander, um den mindestens einen schweißabgelagerten Teil zu bilden.

8. Verfahren zum Herstellen einer Elektrizitätsspeichervorrichtung nach einem der Ansprüche 1 bis 6, das Verfahren umfassend:
erstes Falten zum mindestens doppelten Falten eines Endteils der Anschlussleitung;
zweites Verbinden zum Verbinden des gefalteten Endteils; und
drittes Verbinden zum Verbinden des verbundenen Endteils und des Vorsprungs der Dichtungsplatte miteinander, um den mindestens einen schweißabgelagerten Teil zu bilden.

9. Verfahren zum Herstellen einer Elektrizitätsspeichervorrichtung nach einem der Ansprüche 1 bis 6, das Verfahren umfassend:
viertes Verbinden zum Verbinden der Anschlussleitung und des Vorsprungs der Dichtungsplatte miteinander;
zweites Falten zum mindestens doppelten Falten des Endteils der Anschlussleitung, um einen Verbindungsabschnitt zwischen der Anschlussleitung und dem Vorsprung zu überlappen; und
fünftes Verbinden zum Verbinden des gefalteten Endteils, um den mindestens einen schweißabgelagerten Teil zu bilden.

## Revendications

1. Dispositif de stockage d'électricité comprenant :
un boîtier comprenant une partie tubulaire qui est cylindrique et qui comprend une partie d'extrémité ouverte au niveau d'une première extrémité, et une partie de fond fermant une deuxième extrémité de la partie tubulaire ;
un élément de stockage d'électricité disposé à l'intérieur du boîtier et comprenant une paire d'électrodes ;
une connexion connectée à une électrode de la paire d'électrodes ; et
un organe d'étanchéité pour assurer l'étanchéité de la partie d'extrémité ouverte du boîtier,
l'organe d'étanchéité comprenant un joint avec une propriété isolante, et une plaque d'étanchéité avec une conductivité électrique,
le joint comprenant une partie de compression interposée entre la partie tubulaire et la plaque d'étanchéité, et une base qui est en forme de disque et qui chevauche la plaque d'étanchéité, et
la plaque d'étanchéité comprenant une partie déplaçable comprenant une protubérance faisant saillie vers l'élément de stockage d'électricité, et une partie périphérique externe prévue à une périphérie de la partie déplaçable et serrée par la partie de compression,
la base disposée entre la plaque d'étanchéité et l'élément de stockage d'électricité,
la base comprenant un trou traversant,
la protubérance de la plaque d'étanchéité étant insérée dans le trou traversant,
la connexion comprenant une partie repliée qui est pliée au moins en double et jointée par au moins une partie de soudage,
la protubérance de la plaque d'étanchéité et la partie repliée de la connexion étant connectées l'une à l'autre, et
la connexion entre la protubérance et la connexion étant déconnectée lorsque la protubérance est déplacée dans une direction éloignée de la connexion en réponse à une augmentation d'une pression interne à l'intérieur du boîtier.

2. Dispositif de stockage d'électricité selon la revendication 1, dans lequel la partie repliée de la connexion comprend une première section chevauchant la protubérance vue selon un axe du boîtier, et une deuxième section chevauchant la base vue selon l'axe,
la première section et la deuxième section comprenant chacune une partie correspondante de l'au moins une partie de soudage.

3. Dispositif de stockage d'électricité selon la revendication 2, dans lequel une partie de soudage correspondant à la deuxième section parmi l'au moins une partie de soudage chevauche un bord du trou traversant dans la base vu selon l'axe.

4. Dispositif de stockage d'électricité selon l'une quelconque des revendications 1 à 3, dans lequel la partie repliée est formée par repliage de la connexion dans une direction longitudinale de la connexion et jonction de la connexion repliée.

5. Dispositif de stockage d'électricité selon l'une quelconque des revendications 1 à 3, dans lequel la partie repliée est formée par repliage de la connexion dans une direction de largeur de la connexion et jonction de la connexion repliée.

6. Dispositif de stockage d'électricité selon la revendication 2 ou la revendication 3, dans lequel une dimension dans une direction dans laquelle la connexion d'une partie de soudage correspondant à la première section parmi l'au moins une partie de soudage fait face à la protubérance est une plus grande qu'une dimension dans une direction dans laquelle la connexion d'une partie de soudage correspondant à la deuxième section parmi l'au moins une partie de soudage fait face à la protubérance.

7. Procédé de fabrication d'un dispositif de stockage d'électricité selon l'une quelconque des revendications 1 à 6, le procédé comprenant :
un premier repliage consistant à replier une partie d'extrémité de la connexion au moins en double ;
une première jonction consistant à mettre en contact la partie d'extrémité étant repliée et la protubérance de la plaque d'étanchéité l'une avec l'autre et à joindre la partie d'extrémité étant repliée et la protubérance de la plaque d'étanchéité l'une à l'autre pour former l'au moins une partie de soudage.

8. Procédé de fabrication d'un dispositif de stockage d'électricité selon l'une quelconque des revendications 1 à 6, le procédé comprenant :
un premier repliage consistant à replier une partie d'extrémité de la connexion au moins en double ;
une deuxième jonction consistant à joindre la partie d'extrémité repliée ; et
une troisième jonction consistant à joindre la partie d'extrémité jointée et la protubérance de la plaque d'étanchéité l'une à l'autre pour former l'au moins une partie de soudage.

9. Procédé de fabrication d'un dispositif de stockage d'électricité selon l'une quelconque des revendications 1 à 6, le procédé comprenant :
une quatrième jonction consistant à joindre la connexion et la protubérance de la plaque d'étanchéité l'une à l'autre ;
un deuxième repliage consistant à replier la partie d'extrémité de la connexion au moins en double pour chevaucher une section de jonction entre la connexion et la protubérance ; et
une cinquième jonction consistant à joindre la partie d'extrémité étant repliée pour former l'au moins une partie de soudage.
